# EUROPÄISCHE PATENTSCHRIFT

(11) **EP 2 664 522 B1**
(45) Veröffentlichungstag und Bekanntmachung des Hinweises auf die Patenterteilung: **29.07.2015**
(21) Anmeldenummer: 12170221.1
(22) Anmeldetag: 31.05.2012
(51) Int. Cl.: B62D 47/02, F16F 9/28

(54) **Drehgelenk mit Drehwinkelmessung**
Swivel joint with rotation angle measurement
Articulation rotative avec mesure d'angle de rotation

(30) Priorität: 15.05.2012 DE 102012104233
(43) Veröffentlichungstag der Anmeldung: 20.11.2013
(73) Patentinhaber: Hemscheidt Fahrwerktechnik GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- WO-A1-85/03263
- DE-A1- 3 923 677
- DE-A1- 4 031 626
- US-A1- 2011 018 231

## Beschreibung

Die vorliegende Erfindung betrifft ein Drehgelenk, insbesondere zur gelenkigen Verbindung eines Vorderwagens und eines Hinterwagens eines Omnibusses, bestehend aus einem Gehäuse, das in einer zu einer Drehachse des Gelenkes senkrechten Ebene in zwei Gehäuseteile unterteilt ist, wobei die beiden Gehäuseteile gegeneinander um die Drehachse verdrehbar und abgedichtet gegen einen Austritt von in einem Gehäuseinnenraum befindlicher Hydraulikflüssigkeit miteinander verbunden sind, und wobei in dem ersten Gehäuseteil ein Zahnrad eines Zahnstangenantriebs eines Schwingungsdämpfers drehbar gelagert ist, und das zweite Gehäuseteil ein Antriebselement bildet und mit dem Zahnrad drehfest verbunden ist.

Ein derartiges Drehgelenk ist aus der DE 40 31 626 bekannt. Dieses Drehgelenk hat sich in der Praxis außerordentlich gut bewährt. Bei derartigen Drehgelenken besteht die Anforderung, in Abhängigkeit von der Knicklage des Vorderwagens zum Hinterwagen des Omnibusses, d. h. von der Drehstellung des Drehgelenks die Antriebskraft des Fahrzeuges zu steuern. Durch eine derartige Steuerung kann die Unfallgefahr wesentlich reduziert werden, da hierdurch Fehlreaktionen des Fahrzeugfahrers ausgeglichen werden können.

Der vorliegenden Erfindung liegt die Aufgabe zu Grunde, ausgehend von dem eingangs beschriebenen Drehgelenk dieses derart zu verbessern, dass es eine exakte Erfassung der Drehstellung und darüber hinaus eine Ausführung des Drehgelenks ermöglicht, so dass der Bauraum des Drehgelenks nicht vergrößert wird. Erfindungsgemäß wird dies dadurch erreicht, dass koaxial zur Drehachse innerhalb des Gehäuses in einer Aufnahmekammer eine Drehwinkelmessvorrichtung angeordnet und mit dem zweiten Gehäuseteil zur Messung des Drehwinkels zusammenwirkt, und die Aufnahmekammer gegen einen Eintritt der Hydraulikflüssigkeit abgedichtet ist.

Durch die Anordnung der Drehwinkelmessvorrichtung koaxial zur Drehachse innerhalb des Gehäuses wird eine exakte Drehwinkelerfassung ermöglicht und gleichzeitig gewährleistet die erfindungsgemäße Anordnung, dass der von dem Gehäuse benötigte Bauraum nicht vergrößert wird. Diese Ausbildung ermöglicht auch eine Anordnung der erfindungsgemäßen Drehwinkelmessvorrichtung, ohne dass die Hydraulikflüssigkeit aus dem Drehgelenk austreten kann. Erfindungsgemäß ist es insbesondere vorteilhaft, wenn die Aufnahmekammer innerhalb der beiden Gehäuseteile angeordnet ist, so dass die Drehwinkelmessvorrichtung im Gehäuse vollständig integriert ist.

Weitere vorteilhafte Ausführungen sind in den Unteransprüchen enthalten.

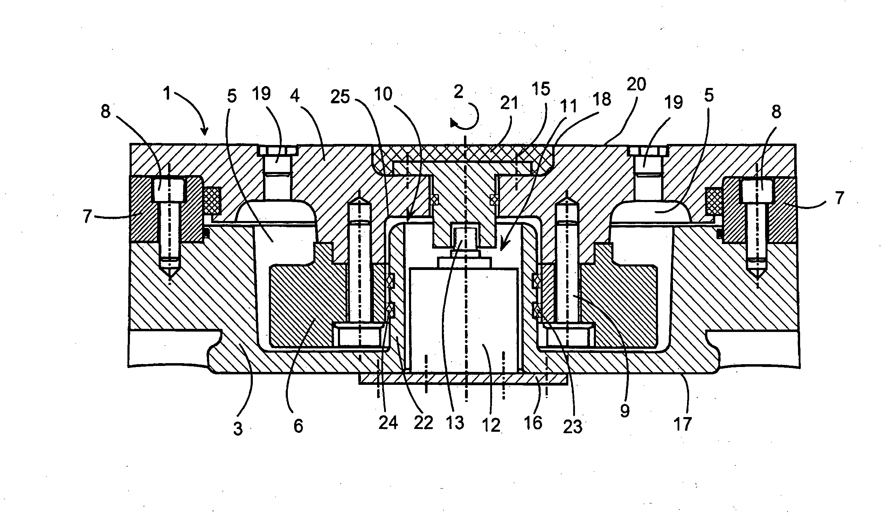

Anhand des in der beiliegenden Zeichnung dargestellten Ausführungsbeispiels soll die Erfindung im Folgenden genauer erläutert werden.

In der Zeichnung sind gleiche Teile stets mit den gleichen Bezugszeichen versehen.

Wie sich aus der beiliegenden Zeichnung ergibt, ist ein erfindungsgemäßes Gehäuse 1 eines erfindungsgemäßen Drehgelenkes in einer zu seiner Drehachse 2 senkrechten Ebene in zwei Gehäuseteile 3, 4 unterteilt. Diese beiden Gehäuseteile 3, 4 sind gegeneinander um die Drehachse 2 verdrehbar sowie abgedichtet miteinander verbunden. Die Abdichtung ist derart, dass eine im Gehäuseinnenraum 5 befindliche Hydraulikflüssigkeit, insbesondere ein Hydrauliköl, nicht nach außen austreten kann. In dem ersten Gehäuseteil 3 ist ein Zahnrad 6 drehbar gelagert. Dieses Zahnrad 6 ist Teil eines Zahnstangenantriebs eines Schwingungsdämpfers. Hierzu wird, was die Ausgestaltung des Schwingungsdämpfers betrifft, im vollen Umfange auf die DE 40 31 626 verwiesen. Insoweit ist die darin beschriebene Ausgestaltung auch Gegenstand der vorliegenden Anmeldung. Das zweite Gehäuseteil 4 ist mit dem Zahnrad 6 drehfest verbunden und bildet ein Antriebselement, insbesondere einen Drehschemel des erfindungsgemäßen Drehgelenks. Durch Verdrehen bzw. Verschwenken des zweiten Gehäuseteils 4 gegenüber dem ersten Gehäuseteil 3 wird die Drehbewegung über das Zahnrad 6 auf den nicht näher beschriebenen Zahnradantrieb übertragen und der damit verbundene Schwingungsdämpfer betätigt. Zwischen dem ersten Gehäuseteil 3 und dem zweiten Gehäuseteil 4 ist ein Drehlager 7 angeordnet, das die drehbare Verbindung der beiden Gehäuseteile 3, 4 ermöglicht. Dieses Drehlager 7 ist mittels Befestigungsschrauben 8 am ersten Gehäuseteil 3 befestigt. Die Befestigung des Zahnrades 6 am zweiten Gehäuseteil 4 erfolgt über Befestigungsschrauben 9. Zur Befüllung des Gehäuseinnenraums 5 mit der Hydraulikflüssigkeit, insbesondere dem Hydrauliköl, sind im zweiten Gehäuseteil 4 Füllbohrungen vorhanden, die mittels Dichtstopfen 19 verschlossen sind.

Das Drehlager 7 kann als Wälzlager oder auch als Gleitlager ausgebildet sein, wobei das Drehlager 7 derart dimensioniert ist, dass es sowohl axiale als auch radiale Kräfte aufnehmen kann.

Wie weiterhin aus der vorliegenden Figur erkennbar ist, ist koaxial zur Drehachse 2 innerhalb des Gehäuses 1 in einer Aufnahmekammer 10 eine Drehwinkelmessvorrichtung 11 angeordnet. Diese Drehwinkelmessvorrichtung 11 wirkt mit dem zweiten Gehäuseteil 4, dem Drehschemel zur Messung des Drehwinkels zwischen dem ersten Gehäuseteil 3 und dem zweiten Gehäuseteil 4 zusammen. Die Aufnahmekammer 10 ist gegen einen Eintritt von Hydraulikflüssigkeit, die sich im Gehäuseinnenraum 5 befindet, abgedichtet. Die Gehäusekammer 10 ist innerhalb der beiden Gehäuseteile 3, 4 angeordnet, so dass die Drehwinkelmessvorrichtung 11 im Gehäuse 1 vollständig integriert ist. Somit nimmt die erfindungsgemäße Drehwinkelmessvorrichtung 11 keinerlei zusätzlichen Bauraum ein. Im dargestellten Ausführungsbeispiel besteht die Drehwinkelmessvorrichtung 11 aus einem Drehpotentiometer 12, das mit seiner Drehwelle 13 über einen Mitnehmer 14 mit dem zweiten Gehäuseteil 4 verbunden ist. Der Mitnehmer 14 ist mit dem zweiten Gehäuseteil 4, dem Drehschemel, über Schrauben 15 verbunden. Werden diese Schrauben 15 gelöst, so kann der Mitnehmer 14 verdreht werden, so dass hierdurch ein Nullpunkt der erfindungsgemäßen Drehwinkelmessvorrichtung 11 eingestellt bzw. justiert werden kann. Die Drehwelle 13 ist vorzugsweise endseitig abgeflacht und ist in ein Langloch des Mitnehmers 14 eingesteckt. Bei einer Drehbewegung des zweiten Gehäuseteils 4 gegenüber dem ersten Gehäuseteil 3 wird somit die Drehwelle 13 durch den Mitnehmer 14 verdreht. Alternativ zu der gezeigten Ausbildung der erfindungsgemäßen Drehwinkelmessvorrichtung 11 kann diese aber auch als eine optische oder eine induktive Messvorrichtung ausgebildet sein.

Weiterhin ist aus der Figur zu erkennen, dass die erfindungsgemäße Drehwinkelmessvorrichtung 11 auf einer Halteplatte 16 positioniert bzw. befestigt ist. Im dargestellten Ausführungsbeispiel ist das Drehpotentiometer 12 auf der Halteplatte 16 mittels Schrauben befestigt. Die Halteplatte 16 verschließt die Aufnahmekammer 10 nach außen, wobei die Halteplatte 16 auf einer Außenseite 17 des ersten Gehäuseteils 3 befestigt wird, beispielsweise angeschraubt wird. Der Mitnehmer 14 ist in einer zur Drehachse 2 koaxialen Durchgangsöffnung 18 des zweiten Gehäuseteils 4 dichtend angeordnet und über die Schrauben 15 mit dem zweiten Gehäuseteil 4 lösbar verbunden. Die Durchgangsöffnung 18 ist derart ausgebildet, dass der Mitnehmer 14 in ihr gegenüber einer Außenfläche 20 des zweiten Gehäuseteils 4 nach innen versetzt angeordnet ist, und die Durchgangsöffnung 18 ist oberhalb des Mitnehmers 14 durch eine Abdeckung 21 staubdicht verschlossen.

Zur Bildung der Aufnahmekammer 10 weist das erste Gehäuseteil 3 zweckmäßigerweise einen hohlzylindrischen Ansatz 22 auf, der koaxial zur Drehachse 2 ausgebildet ist und durch eine Innenbohrung 23 des Zahnrades 6 verläuft. Eine Abdichtung gegen das im Gehäuseinnenraum 5 befindliche Hydrauliköl bzw. die Hydraulikflüssigkeit aus dem Spalt zwischen dem hohlzylindrischen Ansatz 22 und der Innenbohrung 23 in die Aufnahmekammer 10 erfolgt durch Dichtungen 24, die auf der Wandung der Innenbohrung 23 des Zahnrades 6 abdichten. Vorzugsweise sind zwei übereinander angeordnete Dichtungen 24 vorgesehen. Zur Aufnahme des hohlzylindrischen Ansatzes 22 besitzt das zweite Gehäuseteil 4 eine konzentrisch bzw. koaxial angeordnete Ausnehmung 25 an seiner dem ersten Gehäuseteil 3 zugekehrten Innenseite. In diese Ausnehmung 25 ragt der hohlzylindrische Ansatz 22 endseitig hinein.

Durch die erfindungsgemäße Ausbildung ist die Drehwinkelmessvorrichtung 11 vor Verschmutzung geschützt. Wesentlich ist, dass die erfindungsgemäße Drehwinkelmessvorrichtung 11 im Drehzentrum des Drehgelenkes angeordnet ist. Hierbei kommt die erfindungsgemäße Drehwinkelmessvorrichtung 11 nicht mit der im Gehäuseinnenraum 5 befindlichen Gelenkfüllung aus Hydrauliköl in Berührung. Da erfindungsgemäß die Drehwinkelmessvorrichtung 11 mit dem ersten Gehäuseteil 3 verbunden ist, wird gewährleistet, dass elektrische Anschlussleitungen für die erfindungsgemäße Drehwinkelmessvorrichtung 11 keine Bewegung bei einer Drehung des zweiten Gehäuseteils 4, dem Drehschemel, gegenüber dem Gehäuse 1 durchführen. Das erfindungsgemäße Drehgelenk ist ölmäßig dicht zur Außenseite, und alle Hohlräume des erfindungsgemäßen Drehgelenks außer der Aufnahmekammer 10 im Drehzentrum können komplett mit Öl gefüllt sein. Somit wird die hydraulische Funktion durch den Einbau der erfindungsgemäßen Drehwinkelmessvorrichtung 11 nicht beeinflusst. Zudem kann diese aus- und eingebaut werden, ohne dass die Gehäusefüllung aus dem erfindungsgemäßen Drehgelenk austritt.

## Patentansprüche

1. Drehgelenk, insbesondere zur gelenkigen Verbindung eines Vorderwagens und eines Hinterwagens eines Omnibusses, bestehend aus einem Gehäuse (1), das in einer zu einer Drehachse (2) des Gelenks senkrechten Ebene in zwei Gehäuseteile (3, 4) unterteilt ist, wobei die beiden Gehäuseteile (3, 4) gegeneinander um die Drehachse (2) verdrehbar und abgedichtet gegen einen Austritt von in einem Gehäuseinnenraum (5) befindlicher Hydraulikflüssigkeit miteinander verbunden sind, und wobei in dem ersten Gehäuseteil (3) ein Zahnrad (6) eines Zahnstangenantriebs eines Schwingungsdämpfers drehbar gelagert ist, und das zweite Gehäuseteil (4) ein Antriebselement bildet und mit dem Zahnrad (6) drehfest verbunden ist,
**dadurch gekennzeichnet, dass** koaxial zur Drehachse im Drehzentrum des Drehgelenks innerhalb des Gehäuses (1) in einer Aufnahmekammer (10) eine Drehwinkelmessvorrichtung (11) angeordnet ist und mit dem zweiten Gehäuseteil (4) zur Messung des Drehwinkels zusammenwirkt, und die Aufnahmekammer (10) gegen einen Eintritt des Hydraulikflüssigkeit abgedichtet ist.

2. Drehgelenk nach Anspruch 1,
**dadurch gekennzeichnet, dass** die Aufnahmekammer (10) innerhalb der beiden Gehäuseteile (3, 4) angeordnet ist, so dass die Drehwinkelmessvorrichtung (11) im Gehäuse (1) vollständig integriert ist.

3. Drehgelenk nach Anspruch 1 oder 2,
**dadurch gekennzeichnet, dass** die Drehwinkelmessvorrichtung (11) aus einem Drehpotentiometer (12) besteht, das mit seiner Drehwelle (13) über einen Mitnehmer (14) mit dem zweiten Gehäuseteil (4) verbunden ist.

4. Drehgelenk nach Anspruch 1 oder 2,
**dadurch gekennzeichnet, dass** die Drehwinkelmessvorrichtung (11) aus einem optischen oder induktiven Messsystem besteht.

5. Drehgelenk nach einem der Ansprüche 1 bis 4,
**dadurch gekennzeichnet, dass** die Drehwinkelmessvorrichtung (11) auf einer Halteplatte (16) positioniert ist, mit der die Aufnahmekammer (10) einseitig verschlossen ist, wobei die Halteplatte (16) auf einer Außenseite (17) des ersten Gehäuseteils (3) befestigt ist.

6. Drehgelenk nach Anspruch 3 oder 5,
**dadurch gekennzeichnet, dass** der Mitnehmer (14) in einer zur Drehachse (2) koaxialen Durchgangsöffnung (18) des zweiten Gehäuseteils (4) dichtend angeordnet ist und über Schrauben (15) mit dem zweiten Gehäuseteil (4) lösbar verbunden ist.

7. Drehgelenk nach Anspruch 6,
**dadurch gekennzeichnet, dass** der Mitnehmer (14) in der Durchgangsöffnung (18) gegenüber einer Außenfläche (20) des zweiten Gehäuseteils (4) nach innen versetzt angeordnet ist, und die Durchgangsöffnung (18) oberhalb des Mitnehmers (14) durch eine Abdeckung (21) staubdicht verschlossen ist.

8. Drehgelenk nach einem der Ansprüche 1 bis 7,
**dadurch gekennzeichnet, dass** koaxial zur Drehachse (2) das erste Gehäuseteil (3) zur Bildung der Aufnahmekammer (10) einen hohlzylindrischen Ansatz (22) besitzt, der durch eine Innenbohrung (23) des im Gehäuse (1) gelagerten Zahnrades (6) verläuft und mittels Dichtungen (24) gegenüber dem Zahnrad (6) abgedichtet ist.

9. Drehgelenk nach einem der Ansprüche 1 bis 8,
**dadurch gekennzeichnet, dass** koaxial zur Drehachse (2) im zweiten Gehäuseteil (4) an dessen dem ersten Gehäuseteil (3) zugekehrten Seite eine Ausnehmung (25) ausgebildet ist, in die der hohlzylindrische Ansatz (22) endseitig hineinragt.

## Claims

1. Rotary joint, in particular for the articulated connection of a front carriage and a rear carriage of an omnibus, composed of a housing (1) which is subdivided into two housing parts (3, 4) in a plane perpendicular to an axis of rotation (2) of the joint, the two housing parts (3, 4) being connected to one another rotatably with respect to one another about the axis of rotation (2) and so as to be sealed off against an egress of hydraulic fluid located in a housing inner space (5), and a gearwheel (6) of a rack drive of a vibration damper being mounted rotatably in the first housing part (3), and the second housing part (4) forming a drive element and being connected fixedly in terms of rotation to the gearwheel (6), **characterized in that** a rotary-angle measurement device (11) is arranged inside the housing (1) in a reception chamber (10) coaxially to the axis of rotation in the center of rotation of the rotary joint and cooperates with the second housing part (4) in order to measure the rotary angle, and the reception chamber (10) is sealed off against an ingress of hydraulic fluid.

2. Rotary joint according to Claim 1, **characterized in that** the reception chamber (10) is arranged inside the two housing parts (3, 4) so that the rotary-angle measurement device (11) is fully integrated in the housing (1).

3. Rotary joint according to Claim 1 or 2, **characterized in that** the rotary-angle measurement device (11) is composed of a rotary potentiometer (12) which is connected by means of its rotary shaft (13) to the second housing part (4) via a dog (14).

4. Rotary joint according to Claim 1 or 2, **characterized in that** the rotary-angle measurement device (11) is composed of an optical or inductive measurement system.

5. Rotary joint according to one of Claims 1 to 4, **characterized in that** the rotary-angle measurement device (11) is positioned on a holding plate (16), by means of which the reception chamber (10) is closed on one side, the holding plate (16) being fastened on an outer side (17) of the first housing part (3).

6. Rotary joint according to Claim 3 or 5, **characterized in that** the dog (14) is arranged sealingly in a through-orifice (18), coaxial to the axis of rotation (2), of the second housing part (4) and is connected releasably to the second housing part (4) via screws (15).

7. Rotary joint according to Claim 6, **characterized in that** the dog (14) is arranged in the through-orifice (18) so as to be offset inwardly with respect to an outer face (20) of the second housing part (4), and the through-orifice (18) is closed, dust-tight, above the dog (14) by means of a cover (21).

8. Rotary joint according to one of Claims 1 to 7, **characterized in that,** to form the reception chamber (10), the first housing part (3) possesses coaxially to the axis of rotation (2) a hollow-cylindrical extension (22) which runs through an inner bore (23) of the gearwheel (6) mounted in the housing (1) and which is sealed off with respect to the gearwheel (6) by means of seals (24).

9. Rotary joint according to one of Claims 1 to 8, **characterized in that** a recess (25), into which the hollow-cylindrical extension (22) projects on the end face, is formed coaxially to the axis of rotation (2) in the second housing part (4) on its side facing the first housing part (3).

## Revendications

1. Articulation rotative, en particulier pour la liaison articulée d'une partie avant et d'une partie arrière d'un autobus, constituée d'un boîtier (1) qui est divisé en deux parties de boîtier (3, 4) dans un plan perpendiculaire à un axe de rotation (2) de l'articulation, les deux parties de boîtier (3, 4) étant reliées l'une à l'autre de manière à pouvoir tourner l'une par rapport à l'autre autour de l'axe de rotation (2) et de manière étanche par rapport à une sortie de fluide hydraulique situé dans un espace intérieur de boîtier (5), et une roue dentée (6) d'un entraînement par crémaillère d'un amortisseur de vibrations étant montée à rotation dans la première partie de boîtier (3), et la deuxième partie de boîtier (4) formant un élément d'entraînement et étant reliée de manière solidaire en rotation à la roue dentée (6),
**caractérisée en ce qu'**un dispositif de mesure d'angle de rotation (11) est disposé coaxialement à l'axe de rotation au centre de rotation de l'articulation rotative à l'intérieur du boîtier (1) dans une chambre de réception (10) et coopère avec la deuxième partie de boîtier (4) pour la mesure de l'angle de rotation, et la chambre de réception (10) est rendue étanche par rapport à une entrée du fluide hydraulique.

2. Articulation rotative selon la revendication 1,
**caractérisée en ce que** la chambre de réception (10) est disposée à l'intérieur des deux parties de boîtier (3, 4), de telle sorte que le dispositif de mesure d'angle de rotation (11) soit entièrement intégré dans le boîtier (1).

3. Articulation rotative selon la revendication 1 ou 2,
**caractérisée en ce que** le dispositif de mesure d'angle de rotation (11) est constitué d'un potentiomètre rotatif (12) qui est relié, par son arbre rotatif (13), à la deuxième partie de boîtier (4) par le biais d'un élément d'entraînement (14).

4. Articulation rotative selon la revendication 1 ou 2,
**caractérisée en ce que** le dispositif de mesure d'angle de rotation (11) est constitué d'un système de mesure optique ou inductif.

5. Articulation rotative selon l'une quelconque des revendications 1 à 4,
**caractérisée en ce que** le dispositif de mesure d'angle de rotation (11) est positionné sur une plaque de retenue (16) à l'aide de laquelle la chambre de réception (10) est fermée unilatéralement, la plaque de retenue (16) étant fixée sur un côté extérieur (17) de la première partie de boîtier (3).

6. Articulation rotative selon la revendication 3 ou 5,
**caractérisée en ce que** l'élément d'entraînement (14) est disposé de manière étanche dans une ouverture traversante (18), coaxiale à l'axe de rotation (2), de la deuxième partie de boîtier (4) et est relié de manière amovible à la deuxième partie de boîtier (4) par le biais de vis (15).

7. Articulation rotative selon la revendication 6,
**caractérisée en ce que** l'élément d'entraînement (14) est disposé dans l'ouverture traversante (18) de manière décalée vers l'intérieur par rapport à une surface extérieure (20) de la deuxième partie de boîtier (4), et l'ouverture traversante (18) est fermée de manière étanche à la poussière au-dessus de l'élément d'entraînement (14) au moyen d'un recouvrement (21).

8. Articulation rotative selon l'une quelconque des revendications 1 à 7,
**caractérisée en ce que,** coaxialement à l'axe de rotation (2), la première partie de boîtier (3) présente une saillie (22) cylindrique creuse pour former la chambre de réception (10), laquelle saillie (22) s'étend à travers un alésage intérieur (23) de la roue dentée (6) montée dans le boîtier (1) et est rendue étanche par rapport à la roue dentée (6) au moyen de joints d'étanchéité (24).

9. Articulation rotative selon l'une quelconque des revendications 1 à 8,
**caractérisée en ce qu'**un évidement (25) est réalisé coaxialement à l'axe de rotation (2) dans la deuxième partie de boîtier (4) sur son côté tourné vers la première partie de boîtier (3), dans lequel évidement pénètre la saillie (22) cylindrique creuse du côté de l'extrémité.
